# EUROPÄISCHE PATENTSCHRIFT

(11) **EP 0 719 673 B1**
(45) Veröffentlichungstag und Bekanntmachung des Hinweises auf die Patenterteilung: **18.04.2001**
(21) Anmeldenummer: 95117031.5
(22) Anmeldetag: 28.10.1995
(51) Int. Cl.: B60Q 3/00

(54) **Lichtsystem für den Innenraum eines Kraftfahrzeuges**
Vehicle interior lighting
Dispositif d'éclairage de l'intérieur d'un véhicule

(30) Priorität: 05.11.1994 DE 4439547
(43) Veröffentlichungstag der Anmeldung: 03.07.1996
(73) Patentinhaber: Hella KG Hueck & Co., 59552 Lippstadt (DE)
(72) Erfinder: Damasky, Joachim, Dr., D-59555 Lippstadt (DE); Decker, Detlef, D-59558 Lippstadt (DE); Flottmeyer, Hubert, D-33181 Wünnenberg (DE); Fockers, Willi, D-59558 Lippstadt (DE); Helfmeier, Ulrich, D-59558 Lippstadt (DE); Jost, Franz-Gerhard, D-59821 Arnsberg (DE); Kabst, Jürgen, D-59557 Lippstadt (DE); Vogt, Heinrich, D-33178 Borchen (DE); Wördenweber, Burkard, Dr., D-59555 Lippstadt (DE)

(56) Entgegenhaltungen:
- EP-A- 0 224 448
- FR-A- 2 670 562
- US-A- 5 149 187

## Beschreibung

Die Erfindung betrifft ein Lichtsystem für den Innenraum eines Kraftfahrzeuges, mit mindestens einer Lichterzeugungseinheit, die je aus einer elektrisch ein- und ausschaltbaren Lichtquelle und einem das Licht der Lichtquelle bündelnden Reflektor besteht, mit mindestens einem Lichtleiter, dessen eines Ende zur Einkopplung des gebündelten Lichts mit der Lichterzeugungseinheit gekoppelt ist, wobei der Lichtleiter aus einer Anzahl biegsamer Einzellichtleiter besteht und dessen anderes Ende mindestens ein lichtemittierendes Element bildet und/oder mit mindestens einem lichtemittierenden Element zur direkten oder indirekten Beleuchtung von Flächen und Symbolen verbunden ist.

Bei Kraftfahrzeugen werden zur Erhöhung des Komforts für den Fahrer und die Passagiere zunehmend mehr Leuchten im Bereich des Innenraumes angeordnet. Neben den bekannten Decken- und Leseleuchten, die teilweise in mehrfacher Ausführung im Fahrzeug angeordnet sind, werden zunehmend mehr einzelne Leuchten zur Beleuchtung von Flächen und Symbolen in den Innenraum des Kraftfahrzeuges eingebaut. Jede einzelne Leuchte weist dabei eine elektrisch schaltbare Lichtquelle auf und muß über eine Verkabelung zu dem Bordnetz des Kraftfahrzeuges und zu einem Schalter verfügen. Lichtsysteme dieser Art erfordern aufwendige Kabelbäume, weisen eine aufwendige Montierbarkeit auf und sind aufgrund der Vielzahl der einzelnen Lichtquellen sehr wartungsintensiv.

Aus der deutschen Offenlegungsschrift DE 42 01 657 A1 ist ein Lichtsystem für den Fahrgastraum eines Fahrzeuges bekannt, bei dem zur Reduzierung des Aufwandes für den Kabelbaum und somit zur Reduzierung der elektrischen Leitungen, die im Fahrzeug zum Anschluß der einzelnen Leuchten erforderlich sind, ein Multiplex-Datensystem verwendet wird. Ein solches Multiplex-System erfordert jedoch eine aufwendige, kostenintensive Elektronik und trägt zu einer Reduzierung der Anzahl der einzelnen Lichtquellen nicht bei, so daß auch dieses System eine hohe Wartungsintensität aufweist.

Aus der deutschen Offenlegungsschrift DE 38 38 770 A1 ist ein Beleuchtungssystem für Kraftfahrzeuge bekannt, das aus Beleuchtungsuntersystemen aufgebaut sein kann. Eines dieser Beleuchtungsuntersysteme ist ein Lichtsystem für den Innenraum eines Kraftfahrzeuges. Dieses Lichtsystem weist eine Lichterzeugungseinheit auf, die aus einer elektrisch ein- und ausschaltbaren Lichtquelle und einem das Licht der Lichtquelle bündelnden Reflektor besteht. Das Lichtsystem weist zudem einen Lichtleiter auf, dessen eines Ende zur Einkopplung des gebündelten Lichts mit der Lichterzeugungseinheit gekoppelt ist, wobei der Lichtleiter aus einer Anzahl biegsamer Einzellichtleiter besteht und dessen anderes Ende mit mindestens einem lichtemittierenden Element im Innenraum des Kraftfahrzeuges verbunden ist. Bei dieser bekannten Ausführung erweist sich als nachteilig, daß nur eine zentrale Lichtquelle zur Erzeugung aller Lichtfunktionen im Innenraum des Kraftfahrzeuges vorgesehen ist. Diese muß somit eine Lichtquelle hoher Intensität sein, wodurch am Ort der Lichtquelle Temperaturprobleme auftreten und eine schlechte Energiebilanz vorliegt. Die schlechte Energiebilanz ist dadurch bedingt, daß zur Versorgung aller lichtemittierenden Elemente im Kraftfahrzeug zum einen große Lichtleiterlängen erforderlich sind und zum anderen für die Lichterzeugung unterschiedlicher Funktionen lichtschaltende Elemente in den Lichtleitern vorgesehen werden müssen, so daß das von der einzigen Lichtquelle produzierte Licht nur unzureichend genutzt werden kann. Zudem erweist sich als nachteilig, daß bei dem Ausfall der einzigen Lichtquelle für keine Lichtfunktion mehr Licht im Innenraum des Kraftfahrzeuges zur Verfügung steht.

Der Erfindung liegt die Aufgabe zugrunde, ein Lichtsystem für den Innenraum von Kraftfahrzeugen zu schaffen, das eine optimale Beleuchtung aller zu beleuchtenden Flächen und Symbole im Fahrzeug ermöglicht, wobei ein energietechnisch hoher Wirkungsgrad erzielt wird, ein einfaches elektrisches Schalten der Funktionseinheiten ermöglicht wird sowie die Wartung als auch die Montage erleichtert wird.

Die Aufgabe wird durch die Merkmale des Anspruchs 1 gelöst.

Hierbei erweist sich als besonders vorteilhaft, daß mindestens zwei Lichterzeugungseinheiten mit Lichtleitern und lichtemittierenden Elementen je eine Funktionsgruppe bilden und die Lichterzeugungseinheiten zur Reduzierung der Länge der Lichtleiter räumlich verteilt im Fahrzeug angeordnet sind, wodurch ein energietechnisch hoher Wirkungsgrad bei dem Betrieb des Lichtsystems erreicht werden kann.

Durch die Unterteilung des Lichtsystems in Funktionsgruppen wird ein besonders einfaches Schalten aller zu einer Lichtfunktion gehörenden Lichtquellen und den damit verbundenen lichtemittierenden Elementen ermöglicht.

Es ist von Vorteil, daß die Lichterzeugungseinheit in verschlossenen, jedoch zu öffnenden Räumen hinter der inneren Karosserieverkleidung angeordnet sind, weil somit eine einfache Wartung bei dem Ausfall einzelner Lichtquellen ermöglicht wird.

Eine besonders einfache Montage und Wartung, z. B. wenn Karosserieteile des Kraftfahrzeuges ausgewechselt werden müssen oder demontiert werden müssen, wird dadurch erreicht, daß die Lichtleiter bevorzugt an den Trennstellen von zwei Karosserieteilen oder anderen Fahrzeugteilen trennbar ausgebildet sind.

In diesem Zusammenhang erweist sich als vorteilhaft, daß die Lichtleiter lösbar mit den Lichterzeugungseinheiten ausgebildet sind, so daß bei Ausfall einzelner Lichtquellen auf einfache Art und Weise entweder die Lichterzeugungseinheiten oder die Lichtquellen ausgewechselt werden können. Dadurch, daß die Lichtleiter lösbar mit den lichtemittierenden Elementen ausgebildet sind, ergibt sich neben dem Vorteil der leichten Montierbarkeit auch der Vorteil, daß Karosserieteile, insbesondere Teile der Innenverkleidung des Kraftfahrzeuges, ohne großen Aufwand demontiert und montiert werden können.

Es ist von Vorteil, daß zwischen den Lichtquellen und den Lichtleitern ein thermisch entkoppelndes Bauelement angeordnet ist, das als dem Lichtleiter vorgelagerter Glasstab oder als Filterscheibe ausgebildet ist, wodurch die thermische Belastung des Lichtleiters durch die gebündelten Lichtstrahlen herabgesetzt wird und zudem je nach Ausbildung des Bauteiles eine Homogenisierung der Lichtverteilung erreicht werden kann.

Dadurch, daß in der Verbindung zwischen der Lichtquelle und dem lichtemittierenden Element ein Farbfilter angeordnet ist, ergibt sich der Vorteil, daß einzelne Lichtfunktionen oder Lichtfunktionen einer Funktionsgruppe farbiges Licht emittieren können.

Dadurch, daß die Leistungsaufnahme jeder einzelnen Lichtquelle kleiner gleich 10 Watt ist, ergibt sich ein besonders günstiges thermisches Verhalten und wird zudem ein energietechnisch günstiger Wirkungsgrad bei dem Betrieb des Lichtsystems ermöglicht.

Es ist von Vorteil, daß die Ein- und Ausschaltung der Lichtquellen in Abhängigkeit von der im Innenraum des Fahrzeuges gemessenen Helligkeit erfolgt, weil somit der energietechnische Wirkungsgrad des Kraftfahrzeuges erhöht wird, da eine unnötige Einschaltung von elektrischen Verbrauchern unterbunden wird.

Dadurch, daß die Reflektoren der Lichterzeugungseinheiten mit einem Halteelement zum lösbaren Verbinden der Lichtleiter mit den Lichterzeugungseinheiten verbunden sind, ergibt sich ein besonders einfacher und kostengünstiger Aufbau des Lichtleitsystems.

In diesem Zusammenhang erweist sich als besonders vorteilhaft, daß das Halteelement das thermisch entkoppelnde Bauteil aufnimmt.

Ausführungsbeispiele des Erfindungsgegenstandes sind in den Zeichnungen dargestellt und werden im folgenden anhand dieser Zeichnung beschrieben. Gleiche oder gleichwirkende Bauteile sind in allen Figuren mit gleichen Bezugszeichen versehen.

Es zeigen
- Figur 1: den schematischen Aufbau einer Komponente eines Lichtsystems;
- Figur 2: ein erstes Ausführungsbeispiel gemäß Figur 1;
- Figur 3: ein zweites Ausführungsbeispiel gemäß Figur 1;
- Figur 4: ein drittes Ausführungsbeispiel gemäß Figur 1;
- Figur 5: die schematische Anordnung von Lichterzeugungseinheiten und lichtemittierenden Elementen für eine Orientierungsbeleuchtung;
- Figur 6: die schematische Darstellung der Anordnung von Lichterzeugungseinheiten und lichtemittierenden Elementen für eine Ein- und Ausstiegsbeleuchtung;
- Figur 7: die schematische Darstellung der Anordnung von lichtemittierenden Elementen für eine Arbeitsplatzbeleuchtung.

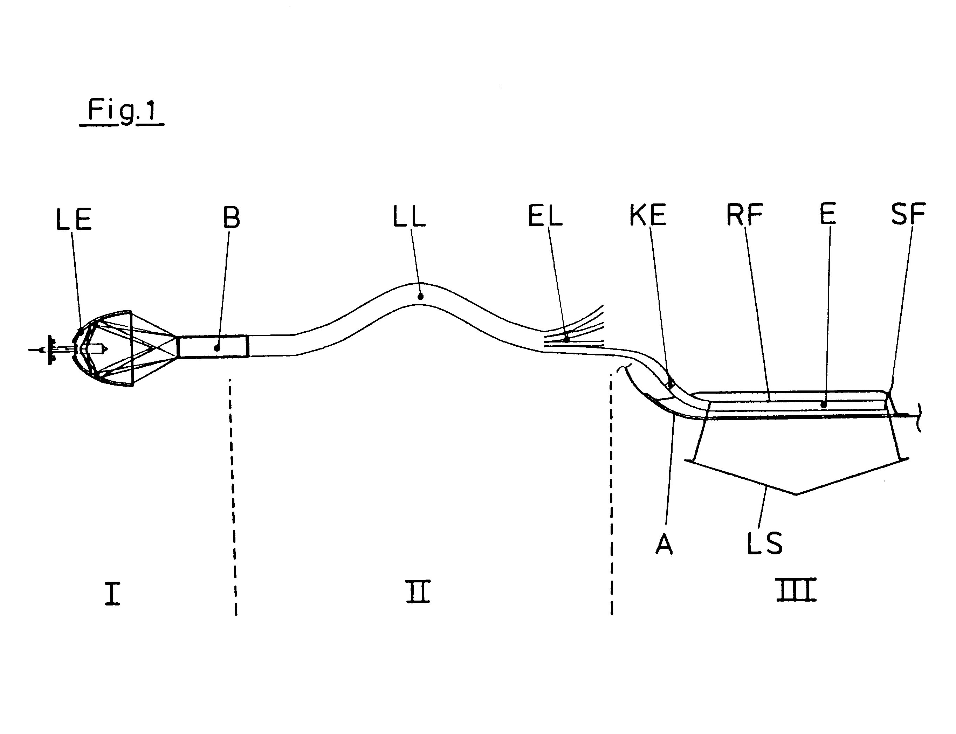

Figur 1 zeigt den schematischen Aufbau einer Komponente einer Funktionsgruppe des erfindungsgemäßen Lichtsystems. Jede Komponente besteht aus drei Teilen. Mit I. ist eine Lichterzeugungseinheit (LE) bezeichnet. Mit II. ist ein Lichtleiter (LL) bezeichnet, der in eine Anzahl Einzellichtleiter (EL) unterteilt sein kann. Mit III. ist mindestens ein lichtemittierendes Element (E) bezeichnet, das die Funktion einer Leuchte für den Innenraum des Fahrzeuges aufweist. Der Lichtleiter (LL) kann über ein thermisch entkoppelndes Bauteil (B) mit der Lichterzeugungseinheit (LE) verbunden sein. Die Verbindung zwischen der Lichterzeugungseinheit (LE) und dem Lichtleiter (LL) kann vorteilhaft lösbar ausgebildet sein. Der Lichtleiter (LL) und somit die Einzellichtleiter (EL) können aus Kunststoff gefertigt sein oder aus Glasfasern bestehen. Die den lichtemittierenden Elementen (E) zugeordneten Einzellichtleiter (EL) können selbst die lichtemittierenden Elemente bilden oder aber auch, wie in Figur 1 gezeigt, über Koppelelemente (KE) mit lichtemittierenden Elementen (E) lösbar verbunden sein, wobei die lichtemittierenden Elemente (E) als Leuchten ausgebildet sind. Bei dem hier gezeigten Ausführungsbeispiel ist ein Einzellichtleiter (EL) über ein Koppelelement (KE) mit einem lichtemittierenden Element (E) verbunden, wobei dieses Element (E) ebenfalls als ein Lichtleiter ausgebildet ist, der hier beispielhaft zur Erzeugung von Lichtstrahlen (LS), die einer vorgegebenen Lichtverteilung entsprechen, auf seiner Rückseite eine Reflektorfläche (RF) aufweist, die z. B. durch Prismen oder durch eine Aufrauhung gebildet werden kann. Das lichtemittierende Element (E) kann, wie hier beispielhaft gezeigt, an seinem äußeren Ende eine Spiegelfläche (SF) zur besseren Nutzung des zur Verfügung stehenden Lichts aufweisen. Zur bestmöglichen Integration des lichtemittierenden Elementes (E) in dem Innenraum des Kraftfahrzeuges kann dieses mit einer lichtdurchlässigen Abdeckung (A) versehen sein oder in ein lichtdurchlässiges Element (A) eingebaut sein. Entsprechend der für die jeweilige Beleuchtungsfunktion des lichtemittierenden Elementes (E) erforderlichen Lichtmenge können ein oder mehrere Einzellichtleiter (EL) an das lichtemittierende Element (E) lösbar angekoppelt sein oder selbst dieses bilden. Bei dem in Figur 1 beispielhaft gezeigten lichtemittierenden Element wird über den Lichtleiter indirekt eine Beleuchtungsfunktion erzeugt. Bei anderen Ausführungsbeispielen können die freien Enden der Einzellichtleiter (EL) auch zur direkten Beleuchtung genutzt werden. Die Abdeckung (A) kann die Lichtverteilung in bekannter Weise beeinflussen.

Mindestens zwei der in Figur 1 gezeigten Komponenten bestehend aus einer Lichterzeugungseinheit (LE), einem Lichtleiter (LL) und mindestens einem lichtemittierenden Element (E) bilden eine Funktionsgruppe des Lichtsystems. Zur Reduzierung der Länge der Lichtleiter und somit zur Erhöhung des energietechnischen Wirkungsgrades sind die Lichterzeugungseinheiten (LE) räumlich verteilt im Fahrzeug angeordnet. Um ein einfaches Ein- und Ausschalten einer Lichtfunktion zu ermöglichen, werden die Lichtquellen (LQ) einer Funktionsgruppe gleichzeitig ein- und ausgeschaltet.

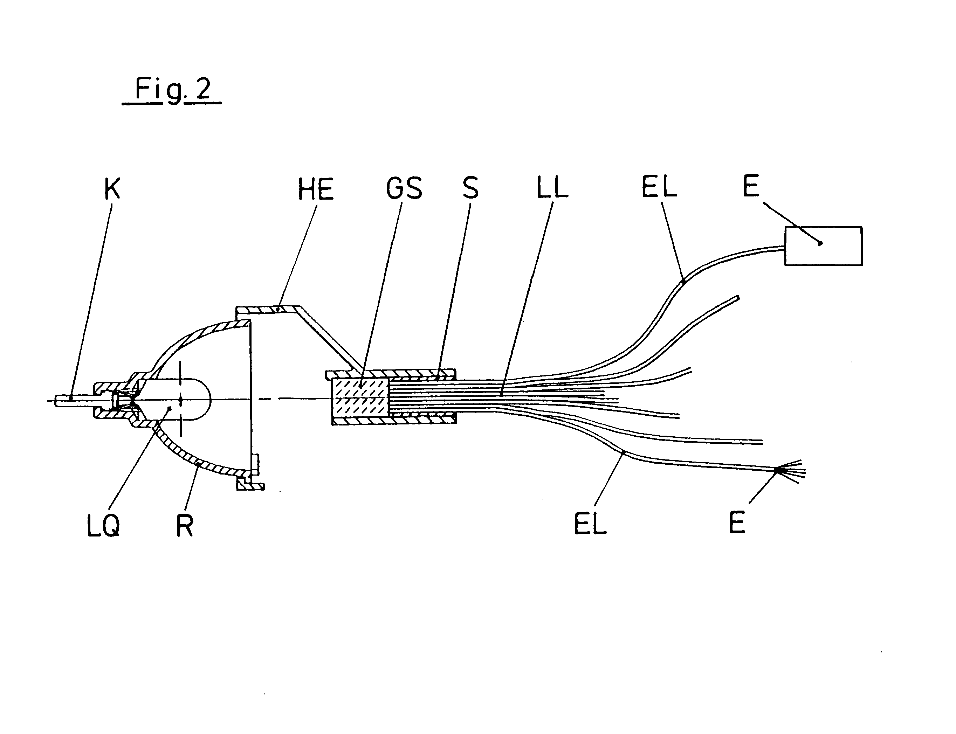

Figur 2 zeigt ein Ausführungsbeispiel gemäß Figur 1. Die Lichterzeugungseinheit (LE) besteht aus einer Lichtquelle (LQ) mit elektrischen Kontakten (K), die in einem Reflektor (R), der vorzugsweise elliptisch ausgebildet ist, angeordnet ist. Der Reflektor (R) ist mit einem Halteelement verbunden, in das lösbar der Lichtleiter (LL) eingesetzt werden kann. Das Halteelement weist hierzu einen röhrenförmigen Abschnitt auf, in den zwischen Lichtquelle (LQ) und Lichtleiter (LL) ein Glasstab (GS) zur thermischen Entkopplung angeordnet werden kann. Dieser Glasstab (GS) ermöglicht zudem eine Homogenisierung der Lichtverteilung. Bei dem hier gezeigten Ausführungsbeispiel weist das Halteelement (HE) in seinem äußeren Umfang Durchbrüche auf, so daß zwischen der Lichterzeugungseinheit (LE) und der Umwelt ein thermischer Austausch erfolgen kann. Zum sicheren Halten und Einsetzen des Lichtleiters (LL), der aus Einzellichtleitern (EL) aufgebaut ist, ist dieser beispielhaft über eine Hülse (S) in das Halteelement eingesetzt. Wie schon unter Figur 1 beschrieben, können die Einzellichtleiter (EL) direkt als lichtemittierende Elemente (E) verwendet werden oder lösbar an lichtemittierende Elemente (E) gekoppelt werden.

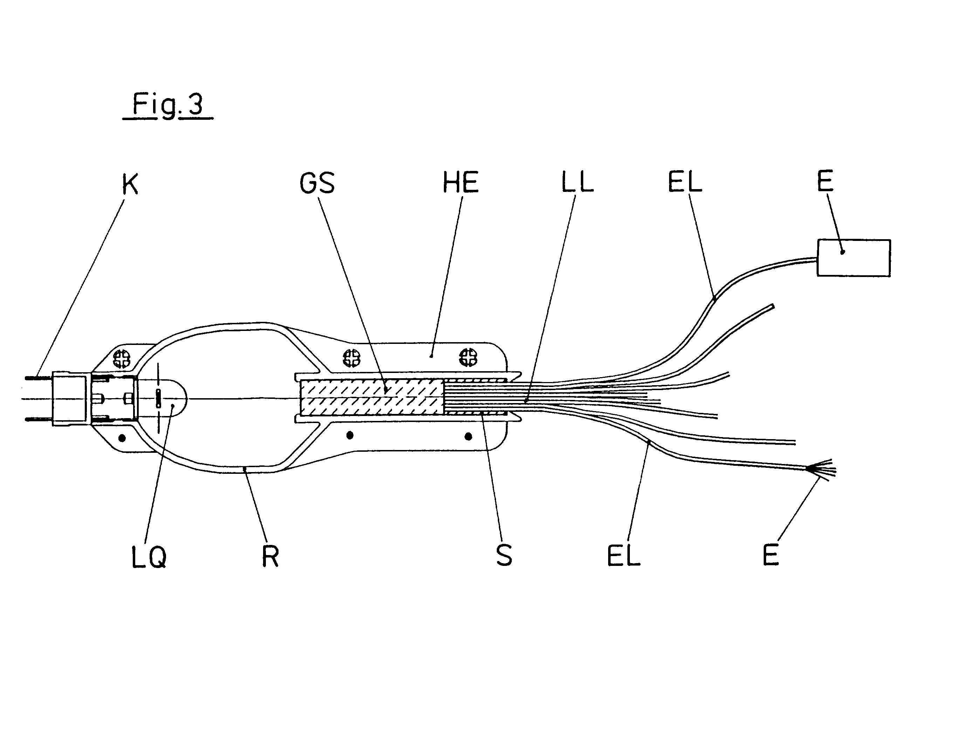

Figur 3 zeigt ein weiteres Ausführungsbeispiel einer Lichterzeugungseinheit (LE). Diese weist ebenfalls eine Lichtquelle (LQ) mit elektrischen Kontakten (K), einen Reflektor (R) und ein Halteelement (HE) auf. Bei dieser Ausführung sind Teile des Reflektors (R) und des Halteelementes (HE) einstückig ausgebildet und können aus zwei Gehäuseteilen zusammengesetzt werden. Auch bei dieser Ausführungsform weist das Halteelement (HE) einen zylinderförmigen Abschnitt auf, der beispielhaft einen Glasstab (GS) zur thermischen Entkopplung und den Lichtleiter (LL) aufnimmt, der in seinem Endabschnitt durch eine Hülse (S) eingefaßt ist. Auch in dieser Figur 3 ist erkennbar, daß die Einzellichtleiter (EL) in unterschiedlicher Art und Weise zu lichtemittierenden Elementen (E) geführt werden können.

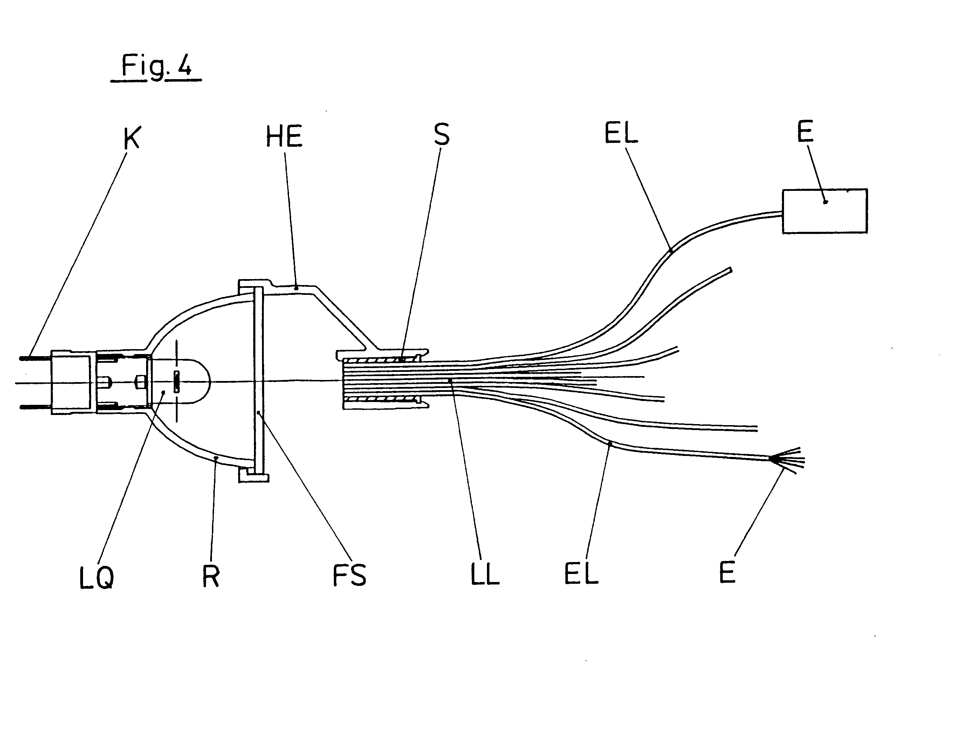

Die in Figur 4 gezeigte Ausführungsform entspricht im wesentlichen der in Figur 2 gezeigten Ausführungsform, mit dem Unterschied, daß zwischen Reflektor (R) und Halteelement (HE) eine Filterscheibe (FS) angeordnet ist, die der thermischen Entkopplung und/oder der Homogenisierung des Lichts dienen kann. Die Filterscheibe (FS) ist somit zwischen der Lichtquelle (LQ), die elektrische Kontakte (K) aufweist, und dem Lichtleiter (LL) angeordnet, der hier ebenfalls über eine Hülse (S) lösbar in das Halteelement eingesetzt ist. Der Lichtleiter (LL) weist auch hier Einzellichtleiter (EL) auf, die mit lichtemittierenden Elementen (E) verbunden sind. Bei allen in den Figuren 1 bis 4 gezeigten Ausführungsbeispielen können die thermisch entkoppelten Bauelemente (B), (GS), (FS) als Farbfilter ausgebildet sein, um für eine Lichtfunktion eine einheitliche Einfärbung des zu emittierenden Lichts zu erhalten. Die Reflektoren (R) sind bevorzugt als ellipsoidförmige Reflektoren (R) ausgebildet, wobei der erste Brennpunkt des Reflektors (R) im Bereich des Ortes der Lichterzeugung der Lichtquelle (LQ) angeordnet ist und der zweite Brennpunkt im Bereich der Einkoppelfläche des Lichtleiters (LL) bzw. des Glasstabes (GS) angeordnet ist.

Zur Erhöhung des energietechnischen Wirkungsgrades kann die Lichtquelle eine Leistungsaufnahme von kleiner gleich 10 Watt aufweisen. Dabei kann jede handelsübliche geeignete Lichtquelle (LQ) Verwendung finden. Bei einem anderen Ausführungsbeispiel kann die Lichtquelle auch als eine lichtemittierende Diode ausgebildet sein, die z. B. einen integrierten Reflektor aufweist oder der ein Zusatzreflektor zugeordnet ist und die über ein Halteelement (HE) mit dem Lichtleiter verbunden ist.

Die Lichtquelle kann auch farbiges Licht abstrahlen.

Die lösbaren Verbindungen zwischen den Lichtleitern (LL), den Einzellichtleitern (EL), den Einzellichtleitern (EL) und den lichtemittierenden Elementen (E) und dem Lichtleiter (LL) und den Lichterzeugungseinheiten (LE) können als Klemmverbindungen, als Rastverbindungen oder als Schraubverbindungen ausgebildet sein. Die Lichtleiter (LL) und deren Einzellichtleiter (EL) können bevorzugt an Trennstellen von zwei Karosserieteilen oder anderen Fahrzeugteilen trennbar ausgebildet sein. Hierzu können, wie in Figur 1 gezeigt, Koppelelemente (KE) Anwendung finden, die eine lösbare Verbindung ermöglichen. Diese Koppelelemente (KE) können zudem dazu dienen, den Lichtleiter (LL) oder Einzellichtleiter (EL) in weitere Lichtleiter (LL) oder Einzellichtleiter (EL) aufzusplitten oder durch Integration eines Farbfilters eine Färbung für einen Teilbereich der Lichtfunktion zu erzielen.

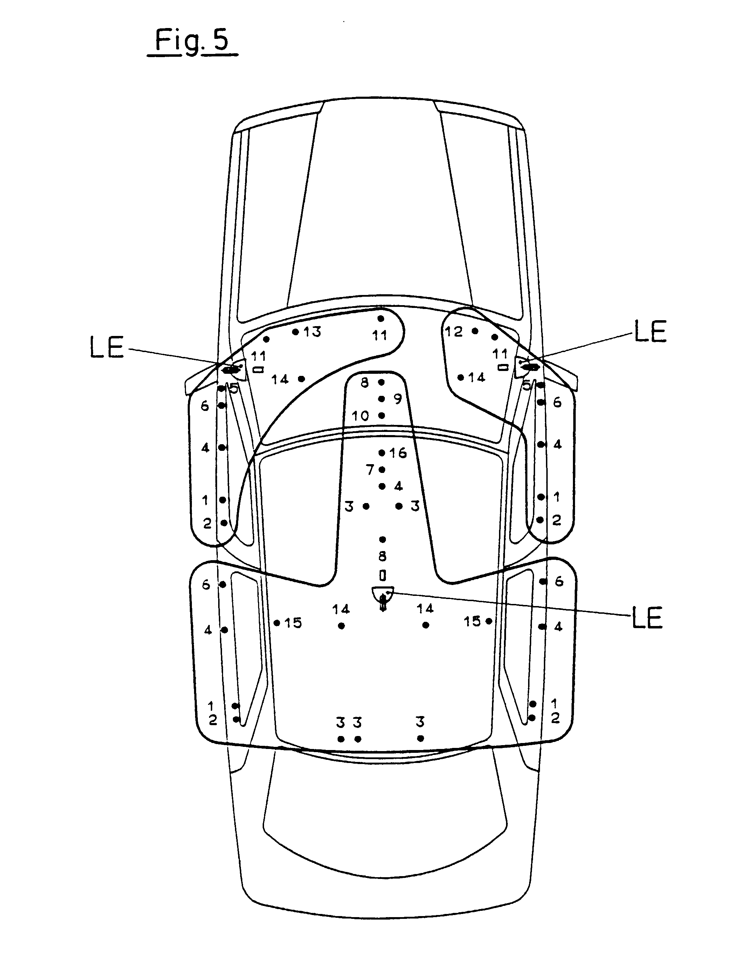

Figur 5 zeigt ein Ausführungsbeispiel für die Anordnung von Lichterzeugungseinheiten (LE) und mit den Lichterzeugungseinheiten (LE) über hier nicht gezeigte Lichtleiter (LL) gekoppelte lichtemittierende Elemente (E). Die hier gezeigte schematische Darstellung entspricht einer Orientierungsbeleuchtung für den Innenraum eines Kraftfahrzeuges. Drei Lichterzeugungseinheiten (LE) mit den jeweils zugehörigen Lichtleitern (LL), die hier nicht gezeigt sind, und den lichtemittierenden Elementen (E) bilden eine Funktionsgruppe. Die Lichtquellen (LQ) der Lichterzeugungseinheiten dieser Funktionsgruppe werden gleichzeitig ein- und ausgeschaltet. Aus Figur 5 ist erkennbar, daß die Lichterzeugungseinheiten (LE) zur Reduzierung der Länge der hier nicht gezeigten Lichtleiter (LL) räumlich verteilt im Fahrzeug angeordnet sind. Die von jeder Lichterzeugungseinheit (LE) mit Licht zu versorgenden lichtemittierenden Elemente (E) sind hierzu zur Verdeutlichung mit je einer geschlossenen Linie umgeben. Die lichtemittierenden Elemente sind in Figur 5 wie folgt bezeichnet:
1 Türgriff
2 Türverriegelung
3 Gurtschlösser
4 Ablagen
5 Spiegelverstellung
6 Fensterheber
7 Handbremse
8 Aschenbecher
9 Schalthebel
10 Niveauregulierung
11 Lüftungsdüsen
12 Griff und Handschuhfach
13 Sicherungskasten
14 Fußraum
15 Haltegriff
16 Schiebedach.

Jedes der angeführten Elemente ist mit einer Leuchte zur indirekten oder direkten Beleuchtung versehen. Diese Leuchten sind als lichtemittierende Elemente ausgebildet, die, wie im Fall der Fußraumbeleuchtung 14, eine direkte Beleuchtung erzielen oder aber, wie beispielhaft bei den Lüftungsdüsen 11, leuchtende Flächen erzeugen und somit eine indirekte Beleuchtungsfunktion darstellen oder aber auch, wie bei dem Schalthebel 9, indirekt Symbole auf dem Schalthebel beleuchten.

Die Ein- und Ausschaltung der in Figur 5 gezeigten Orientierungsbeleuchtung, die zum Beispiel auch durch eine Armaturenbrettbeleuchtung ergänzt werden kann, erfolgt in Abhängigkeit von der Ein- und Ausschaltung eines Standlichtes des Kraftfahrzeuges. Die Ein- und Ausschaltung der Lichtquellen (LQ) der Lichterzeugungseinheiten (LE) erfolgt dabei gleichzeitig.

Um eine einfache Montierbarkeit und Wartung zu ermöglichen, sind die Lichterzeugungseinheiten (LE) in verschlossenen, jedoch zu öffnenden Räumen hinter der inneren Karosserieverkleidung angeordnet. Aus dem gleichen Grund sind die Lichtleiter (LL) bevorzugt an Trennstellen von zwei Karosserieteilen, wie zum Beispiel der Tür zu der feststehenden Karosserie oder anderen Fahrzeugteilen, wie zum Beispiel der Mittelkonsole und der Fahrzeuggrundkarosserie oder der Türinnenverkleidung und der Tür, trennbar ausgebildet. Dadurch, daß auch die Lichterzeugungseinheiten (LE) trennbar mit den Lichtleitern und die Lichtleiter (LL, EL) trennbar mit den lichtemittierenden Elementen (E) ausgebildet sind, ergibt sich ebenfalls eine leichte Montierbarkeit und eine hohe Wartungsfreundlichkeit.

Durch die Anordnung von Farbfiltern zwischen den Lichtquellen (LQ) und den lichtemittierenden Elementen (E) kann auf einfache Art und Weise eine Färbung des Lichts in Abpassung an die Lichtfunktion erzielt werden. Durch die Wahl von Lichtquellen mit einer Leistungsaufnahme kleiner gleich 10 Watt kann ein besonders günstiger energietechnischer Wirkungsgrad erzielt werden. Durch die Ein- und Ausschaltung der Lichtquellen in Abhängigkeit von der im Innenraum des Fahrzeuges gemessenen Helligkeit kann der Wirkungsgrad nochmals verbessert werden. Hierbei kann auch eine energiesparende Dimmung der Lichtquellen in Abhängigkeit von der Helligkeit im Innenraum des Kraftfahrzeuges nützlich sein.

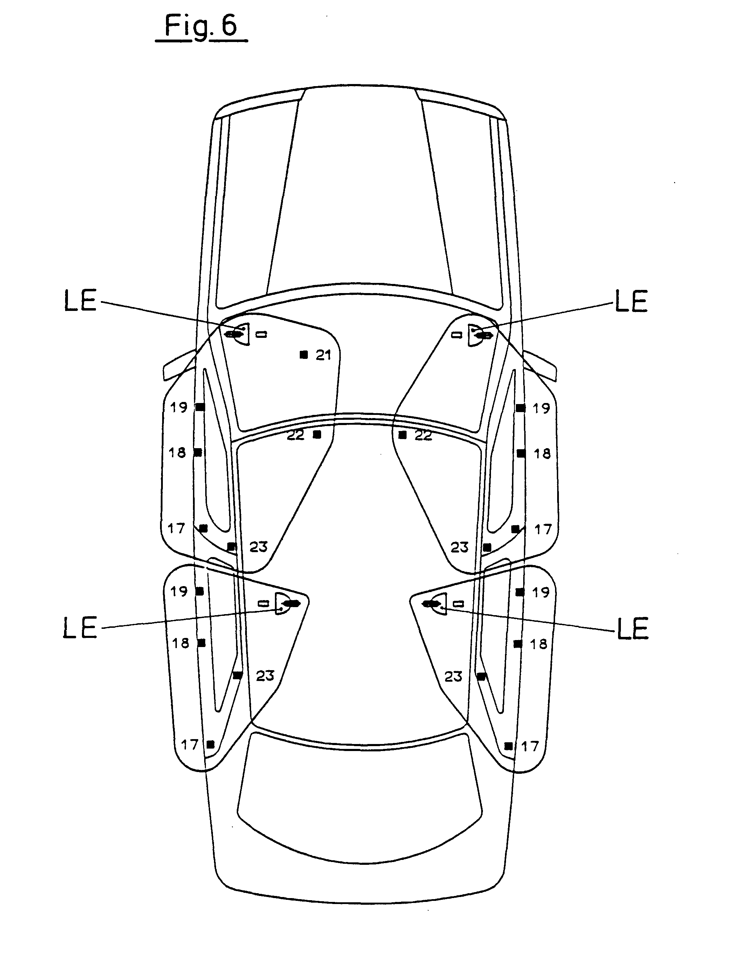

Die oben gemachten Aussagen gelten ebenso für die in Figur 6 schematisch dargestellte Ein- und Ausstiegsbeleuchtung. Bei dem hier gezeigten Ausführungsbeispiel sind, wie schon zu Figur 5 im Grundsatz ausgeführt, weitere vier Lichterzeugungseinheiten (LE) in verschlossenen, jedoch zu öffnenden Räumen hinter der inneren Karosserieverkleidung verteilt im Kraftfahrzeug angeordnet. Jeder Lichterzeugungseinheit (LE) sind lichtemittierende Elemente (E) zugeordnet, die mit dieser über Lichtleiter (LL), die hier nicht gezeigt sind, verbunden sind. Die von jeder Lichterzeugungseinheit (LE) mit Licht zu versorgenden lichtemittierenden Elemente (E) sind wie in Figur 5 jeweils durch eine ununterbrochene Linie eingeschlossen. Die lichtemittierenden Elemente (E) sind hierbei wie folgt bezeichnet:
- 17: Tür-und Warnieuchte
- 18: Ausstiegsbeleuchtung
- 19: Türschweller
- 21: Zündschloß
- 22: Sitzverstellung
- 23: Gurtverstellung.

Je nach gewünschter Beleuchtungsfunktion können alle Lichterzeugungseinheiten (LE) gleichzeitig geschaltet werden und somit eine gemeinsame Funktionsgruppe bilden. Es kann aber auch eine rechts-links Trennung von Funktionsgruppen erfolgen oder aber auch eine vorne-hinten Trennung von Funktionsgruppen erfolgen, wobei die Ein- und Ausschaltung der Funktionsgruppen und die hierzu gehörenden Lichterzeugungseinheiten (LE) in Abhängigkeit von der Stellung von zu öffnenden Zugangselementen zu dem Innenraum des Fahrzeuges oder durch Betätigung eines Schalters erfolgt.

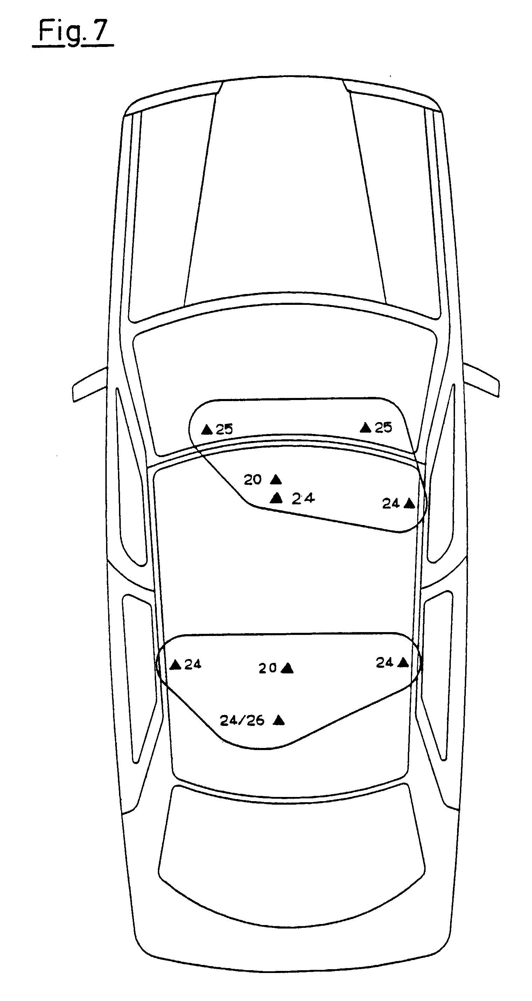

Figur 7 zeigt ein Ausführungsbeispiel für die Anordnung von lichtemittierenden Elementen einer Arbeitsplatzbeleuchtung, die durch Betätigung gesonderter Schalter ein- und ausgeschaltet wird. Die lichtemittierenden Elemente in Figur 7 sind wie folgt bezeichnet:
- 20: Innenlicht
- 24: Leselicht
- 25: Make-up-Spiegel
- 26: blendfreie Grundbeleuchtung.

Der Aufbau der in den Figuren 5 bis 7 dargestellten und oben beschriebenen Funktionsgruppen des Lichtsystems weist eine im wesentlichen gleiche Strukturierung auf, die im Detail den Figuren 1 bis 4 zu entnehmen ist. Je nach der zu erzielenden Beleuchtungsfunktion und der erforderlichen Lichtmenge, bestimmt sich zum einen die Anzahl der zu verwendenden Lichterzeugungseinheiten (LE), die Aufteilung des Lichts über den Lichtleiter (LL) und dessen Einzellichtleiter (EL) und die Ausbildung der lichtemittiernden Elemente als direktes Licht abstrahlende oder als indirektes Licht abstrahlende Leuchten. Besonders einfache und kostengünstige Lösungen für die Ausführung der lichtemittierenden Elemente ergibt sich, wenn die Einzellichtleiter (EL) die lichtemittierenden Elemente selbst bilden, wobei eine direkte Beleuchtung erzielt werden kann, wenn die Endflächen der Einzellichtleiter (EL) zum direkten Lichtaustritt genutzt werden oder, wie in Figur 1 gezeigt, ein Endabschnitt des Einzellichtleiters (EL) zur indirekten Lichtabstrahlung genutzt wird.

Da das Lichtsystem ein einfaches elektrisches Schalten aller Funktionsgruppen ermöglicht, kann diesem System auf einfache Weise sowohl eine Dimmfunktion zur Reduzierung der Lichtabstrahlung, eine Verzögerungsschaltung, z. B. für die Ein- und Ausstiegsbeleuchtung, oder aber eine Schaltung zur helligkeitsgesteuerten Ein- und Ausschaltung bzw. Dimmung des Lichts hinzugeführt werden.

### Bezugszeichenliste

Lichtsystem für den Innenraum eines Kraftfahrzeuges
- A: Abdeckung
- B: thermisch entkoppelndes Bauteil

- E: lichtemittierendes Element
- EL: Einzellichtleiter
- FS: Filterscheibe
- GS: Glasstab
- HE: Halteelement
- LE: Lichterzeugungseinheit
- LL: Lichtleiter
- LQ: Lichtquelle
- LS: Lichtstrahlen

- K: Kontakte
- KE: Koppelelement

- R: Reflektor
- RF: Reflektorfläche
- S: Hülse
- SF: Spiegelfläche

## Patentansprüche

1. Lichtsystem für den Innenraum eines Kraftfahrzeuges, mit mindestens einer Lichterzeugungseinheit (LE), die je aus einer elektrisch ein- und ausschaltbaren Lichtquelle (LQ) und einem das Licht der Lichtquelle (LQ) bündelnden Reflektor (R) besteht, mit mindestens einem Lichtleiter (LL), dessen eines Ende zur Einkopplung des gebündelten Lichts mit der Lichterzeugungseinheit (LE) gekoppelt ist, wobei der Lichtleiter (LL) aus einer Anzahl biegsamer Einzellichtleiter (EL) besteht und dessen anderes Ende mindestens ein lichtemittierendes Element (E) bildet und/oder mit mindestens einem lichtemittierenden Element (E) zur direkten oder indirekten Beleuchtung von Flächen und Symbolen verbunden ist, dadurch gekennzeichnet, daß mindestens zwei Lichterzeugungseinheiten (LE) mit Lichtleitern (LL) und lichtemittierenden Elementen (E) je eine Funktionsgruppe bilden, daß die Lichtquellen (LQ) einer Funktionsgruppe gleichzeitig ein- und ausgeschaltet werden, daß die Lichterzeugungseinheiten (LE) zur Reduzierung der Länge der Lichtleiter (LL) räumlich verteilt im Fahrzeug angeordnet sind, daß eine erste Funktionsgruppe in Abhängigkeit von der Stellung von zu öffnenden Zugangselementen zu dem Innenraum des Fahrzeuges oder der Betätigung eines Schalters ein- und ausgeschaltet wird, daß eine zweite Funktionsgruppe in Abhängigkeit von der Ein- und Ausschaltung eines Standlichts ein- und ausgeschaltet wird, daß die erste Funktionsgruppe eine Ein- und Ausstiegsbeleuchtung erzeugt und daß die zweite Funktionsgruppe eine Orientierungsbeleuchtung erzeugt.

2. Lichtsystem nach Anspruch 1, dadurch gekennzeichnet, daß mindestens eine dritte Funktionsgruppe in Abhängigkeit von der Betätigung eines Schalters ein- und ausgeschaltet wird, und daß die mindestens dritte Funktionsgruppe eine Arbeitsplatzbeleuchtung erzeugt.

3. Lichtsystem nach Anspruch 1 oder Anspruch 2, dadurch gekennzeichnet, daß die Lichterzeugungseinheiten (LE) in verschlossenen, jedoch zu öffnenden Räumen hinter der inneren Karosserieverkleidung angeordnet sind.

4. Lichtsystem nach Anspruch 3, dadurch gekennzeichnet, daß die Lichtleiter (LL, EL) bevorzugt an den Trennstellen von zwei Karosserieteilen oder anderen Fahrzeugteilen trennbar ausgebildet sind.

5. Lichtsystem nach Anspruch 4, dadurch gekennzeichnet, daß die Lichtleiter (LL, EL) lösbar mit den Lichterzeugungseinheiten (LE) ausgebildet sind.

6. Lichtsystem nach Anspruch 5, dadurch gekennzeichnet, daß die Lichtleiter (LL, EL) lösbar mit den lichtemittierenden Elementen (E) ausgebildet sind.

7. Lichtsystem nach mindestens einem der vorstehenden Ansprüche, dadurch gekennzeichnet, daß zwischen den Lichtquellen (LQ) und den Lichtleitern (LL, EL) ein thermisch entkoppelndes Bauteil (B) angeordnet ist, das als dem Lichtleiter (LL, EL) vorgelagerter Glasstab (GS) oder als Filterscheibe (FS) ausgebildet ist.

8. Lichtsystem nach mindestens einem der vorstehenden Ansprüche, dadurch gekennzeichnet, daß in der Verbindung zwischen der Lichtquelle (LE) und den lichtemittierenden Elementen (E) ein Farbfilter angeordnet ist.

9. Lichtsystem nach mindestens einem der vorstehenden Ansprüche, dadurch gekennzeichnet, daß die Leistungsaufnahme jeder einzelnen Lichtquelle (LQ) kleiner gleich 10 Watt ist.

10. Lichtsystem nach mindestens einem der vorstehenden Ansprüche, dadurch gekennzeichnet, daß die Ein- und Ausschaltung der Lichtquellen in Abhängigkeit von der im Innenraum des Fahrzeuges gemessenen Helligkeit erfolgt.

11. Lichtsystem nach mindestens einem der vorstehenden Ansprüche, dadurch gekennzeichnet, daß die Reflektoren (R) der Lichterzeugungseinheiten (LE) mit einem Halteelement (HE) zum lösbaren Verbinden der Lichtleiter (LL) mit den Lichterzeugungseinheiten (LE) verbunden sind.

12. Lichtsystem nach Anspruch 11, dadurch gekennzeichnet, daß das Halteelement (HE) das thermisch entkoppelnde Bauteil (B) aufnimmt.

13. Lichtsystem nach mindestens einem der vorstehenden Ansprüche, dadurch gekennzeichnet, daß die Ausschaltung der Lichtquellen (LQ) der Ein- und Ausstiegsbeleuchtung gesteuert durch eine elektrische Schaltung verzögert erfolgt.

14. Lichtsystem nach mindestens einem der vorstehenden Ansprüche, dadurch gekennzeichnet, daß der Ein- und Ausstiegsbeleuchtung eine Schaltung zugeordnet ist, die die Helligkeit bei Ein- und Ausschaltung der Lichtquellen (LQ) steuert.

## Claims

1. Lighting system for the interior of a motor vehicle, with at least one light generating unit (LE), comprising a light source (LQ) electrically switchable on and off and a reflector (R) bundling the light from the light source (LQ), with at least one fibre-optic light guide (LL), one end of which is coupled to the light-generating unit (LE) for feeding in the bundled light, the fibre-optic light guide (LL) comprising a number of separate flexible optic fibres (EL) and the other end forming at least one light-emitting element (EL) and/or being connected to at least one light-emitting element (E) for the the direct or indirect illumination of surfaces and symbols, characterised in that at least two light-generating units (LE) each form function groups with light guides (LL) and light-emitting elements (E), in that the light sources (LQ) of a function group are switched on and off simultaneously, in that the light-generating units (LE) are arranged spatially distributed in the vehicle to reduce the length of the light guides (LL), in that a first function group is switched on and off in dependence on the position of openable elements providing access to the interior of the vehicle or on the actuation of a switch, in that a second function group is switched on and off in dependence on the switching on and off of a parking light, in that the first function group generates lighting for ingress and egress and in that the second function group generates lighting for orientation.

2. Lighting system according to Claim 1, characterised in that at least a third function group is switched on and off in dependence on the actuation of a switch, and in that this at least third function group generates cockpit lighting.

3. Lighting system according to Claim 1 or 2, characterised in that the light generating units (LE) are arranged in closed but openable spaces behind the interior body trim.

4. Lighting system according to Claim 3, characterised in that the fibre-optic light guides (LL, EL) are preferably formed separably at the separating joints between two body sections or other vehicle parts.

5. Lighting system according to Claim 4, characterised in that the fibre-optic light guides (LL, EL) are formed detachably with the light generating units (LE).

6. Lighting system according to Claim 5, characterised in that the fibre-optic light guides (LL, EL) are formed detachably with the light-emitting elements (E).

7. Lighting system according to at least one of the previous claims, characterised in that a thermally decoupling component (B) is arranged between the light sources (LQ) and the fibre-optic light guides (LL, EL), which component (B) is formed as a glass rod (GS) or filter disc (FS) located ahead of the fibre-optic light guide (LL, EL).

8. Lighting system according to at least one of the previous claims, characterised in that a colour filter is arranged between the light source (LE) and the light-emitting elements (E).

9. Lighting system according to at least one of the previous claims, characterised in that the power draw of each individual light source (LQ) is less than 10 Watts.

10. Lighting system according to at least one of the previous claims, characterised in that the light sources are switched on and off in dependence on the brightness measured in the interior of the vehicle.

11. Lighting system according to at least one of the previous claims, characterised in that the reflectors (R) of the light generating units (LE) are connected to a holding element (HE) for detachably connecting the fibre-optic light guides (LL) with the light generating units (LE).

12. Lighting system according to Claim 11, characterised in that the holding element (HE) houses the thermally decoupling component (B).

13. Lighting system according to at least one of the previous claims, characterised in that the switching on and off of the light sources (LQ) of the ingress and egress lighting is controlled by an electric switch with a time delay.

14. Lighting system according to at least one of the previous claims, characterised in that the ingress and egress lighting is so connected as to be governed by a switching arrangement which controls the brightness when the light sources (LQ) are switched on and off.

## Revendications

1. Système d'éclairage pour l'intérieur d'un véhicule automobile, comportant au moins une unité de génération de lumière (LE) qui est constituée par une source lumineuse (LQ) respective susceptible d'être allumée et éteinte électriquement, et un réflecteur (R) focalisant la lumière de la source lumineuse (LQ), comportant au moins un guide de lumière (LL) dont une extrémité est connectée à l'unité de génération de lumière (LE) pour injecter la lumière focalisée, le guide de lumière (LL) étant constitué par un certain nombre de guides de lumière individuels (EL) souples, et dont l'autre extrémité forme au moins un élément émetteur de lumière (E) et/ou est relié à au moins un élément émetteur de lumière (E) pour éclairer directement ou indirectement des surfaces et des symboles, caractérisé en ce qu'au moins deux unités de génération de lumière (LE) forment avec des guides de lumière (LL) et avec des éléments émetteurs de lumière (E) un groupe fonctionnel respectif, en ce que les sources lumineuses (LQ) d'un groupe fonctionnel peuvent être allumées et éteintes simultanément, en ce que les unités de génération de lumière (LE) sont agencées de manière répartie dans l'espace du véhicule pour réduire la longueur des guides de lumière (LL), en ce qu'un premier groupe fonctionnel est allumé et éteint en fonction de la position d'éléments à ouvrir pour accéder à l'intérieur du véhicule ou en fonction de l'actionnement d'un interrupteur, en ce qu'un second groupe fonctionnel est allumé et éteint en fonction de l'allumage et de l'extinction d'un feu de position, en ce que le premier groupe fonctionnel engendre un éclairage d'accès et en ce que le second groupe fonctionnel engendre un éclairage d'orientation.

2. Système d'éclairage selon la revendication 1, caractérisé en ce qu'au moins un troisième groupe fonctionnel est allumé et éteint en fonction de l'actionnement d'un interrupteur et en ce que ledit au moins troisième groupe fonctionnel engendre un éclairage de poste de conduite.

3. Système d'éclairage selon l'une ou l'autre des revendications 1 et 2, caractérisé en ce que les unités de génération de lumière (LE) sont agencées derrière la garniture de carrosserie intérieure, dans des espaces fermés destinés toutefois à être ouverts.

4. Système d'éclairage selon la revendication 3, caractérisé en ce que les guides de lumière (LL, EL) sont réalisés de préférence de manière à pouvoir être séparés, au niveau des jointures de deux parties de carrosserie ou d'autres parties de véhicule.

5. Système d'éclairage selon la revendication 4, caractérisé en ce que les guides de lumière (LL, EL) sont réalisés de manière détachable avec les unités de génération de lumière (LE).

6. Système d'éclairage selon la revendication 5, caractérisé en ce que les guides de lumière (LL, EL) sont réalisés de manière détachable avec les éléments émetteurs de lumière (E).

7. Système d'éclairage selon au moins l'une quelconque des revendications précédentes, caractérisé en ce qu'entre les sources lumineuses (LQ) et les guides de lumière (LL, EL) est agencé un composant (B) de découplage thermique qui est réalisé sous forme d'une barre de verre (GS) montée en amont du guide de lumière (LL, LE) ou sous forme de disque filtrant (FS).

8. Système d'éclairage selon au moins l'une quelconque des revendications précédentes, caractérisé en ce qu'un filtre chromatique est agencé dans la liaison entre la source lumineuse (LE) et les éléments émetteurs de lumière (E).

9. Système d'éclairage selon au moins l'une quelconque des revendications précédentes, caractérisé en ce que la puissance consommée de chaque source lumineuse (LQ) est inférieure ou égale à 10 Watt.

10. Système d'éclairage selon au moins l'une quelconque des revendications précédentes, caractérisé en ce que l'allumage et l'extinction des sources lumineuses ont lieu en fonction de la luminosité mesurée à l'intérieur du véhicule.

11. Système d'éclairage selon au moins l'une quelconque des revendications précédentes, caractérisé en ce que les réflecteurs (R) des unités de génération de lumière (LE) sont reliés à un élément de retenue (HE) pour relier de manière détachable les guides de lumière (LL) aux unités de génération de lumière (LE).

12. Système d'éclairage selon la revendication 11, caractérisé en ce que l'élément de retenue (HE) reçoit le composant de découplage thermique (B).

13. Système d'éclairage selon au moins l'une quelconque des revendications précédentes, caractérisé en ce que l'extinction des sources lumineuses (LQ) de l'éclairage d'accès a lieu à retardement sous la commande d'un circuit électrique.

14. Système d'éclairage selon au moins l'une quelconque des revendications précédentes, caractérisé en ce qu'à l'éclairage d'accès est associé un circuit qui commande la luminosité lors de l'allumage et l'extinction des sources lumineuses (LQ).
